(19) Europäisches Patentamt
European Patent Office
Office européen des brevets

(11) Publication number: **0 159 185**
**B1**

(12) # EUROPEAN PATENT SPECIFICATION

(45) Date of publication of patent specification: **17.08.88**

(21) Application number: **85302624.3**

(22) Date of filing: **15.04.85**

(51) Int. Cl.$^4$: **C 08 F 220/04,** C 02 F 5/12, C 02 F 5/14, C 23 F 11/173 // (C08F220/04, 220:36, 220:60, 212:14, 226:02)

(54) **Copolymers of carboxylic monomer and betaine-containing monomer.**

(30) Priority: **19.04.84 US 601892**

(43) Date of publication of application:
**23.10.85 Bulletin 85/43**

(45) Publication of the grant of the patent:
**17.08.88 Bulletin 88/33**

(84) Designated Contracting States:
**AT BE CH DE FR GB IT LI LU NL SE**

(56) References cited:
**US-A-3 929 635**

(73) Proprietor: **CALGON CORPORATION**
**Route 60-Campbell's Run Road**
**Robinson Township Pennsylvania 15205 (US)**

(72) Inventor: **Matz, Gary F.**
**47 Franklin Avenue**
**Revere Massachusetts 02151 (US)**

(74) Representative: **Crampton, Keith John Allen et al**
**D YOUNG & CO 10 Staple Inn**
**London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 159 185 B1

**Description**

Most industrial waters contain alkaline-earth metal cations, such as those of calcium, barium and magnesium, and several anions such as bicarbonate, carbonate, sulfate, oxalate, phosphate, silicate and fluoride. When combinations of these anions and cations are present in concentrations that cause the solubility products of the corresponding salts to be exceeded, precipitates form until these concentrations are no longer exceeded. For example, when the concentrations of calcium ion and carbonate ion are such that the solubility product of calcium carbonate is exceeded, a solid phase of calcium product will form.

Solubility product concentrations are exceeded for various reasons, such as partial evaporation of the water phase, change in pH, pressure or temperature, and the introduction of additional ions that form insoluble compounds with the ions already present in the solution.

As these reaction products are precipitated on surfaces of the water-carrying system, they accumulate as scale or deposits. This accumulation prevents effective heat transfer, interferes with fluid flow, facilitates corrosive processes, and harbours bacteria. Scale is an expensive problem in many industrial water systems causing delays and shut downs for cleaning and removal.

The precipitation of scale-forming compounds can be prevented by inactivating their cations with chelating or sequestering agents, so that the solubility product is not exceeded. Generally, this requires large quantities of chelating or sequestering agents as cation, since chelation is a stoichiometric reaction, and these amounts are not always desirable or economical.

Almost 50 years ago, it was discovered that certain inorganic polyphosphates would prevent such precipitation when added in amounts far less than the concentrations needed for sequestering or chelating. The term "polyphosphates" means phosphates having a molar ratio of metal oxide: $P_2O_5$ in the range from 1:1 to 2:1.

When a precipitation inhibitor is present in a potentally scale-forming system at a markedly lower concentration than that required for stoichiometric binding of the scale-forming cation, it is said to be present in "threshold" amounts. See for example, Hatch and Rice, "Industrial Engineering Chemistry", Vol. 31, pages 51 to 53 (Jan. 1939); Reitemeier and Buehrer, "Journal of Physical Chemistry", Vol. 44, No. 5, pages 535 to 536 (May 1940); and U.S. Patent Specifications US—A—2,538,222 and 2,539,305.

Usually, sequestering takes place at a weight ratio of threshold active compound to scale-forming cation components of greater than 10:1, depending on the anion components in the water. Threshold inhibition generally takes place at a weight ratio of threshold active compound to scale-forming cation components of less than 0.5:1.0.

Certain water-soluble polymers, including groups derived from acrylamide and acrylic acid, have been used to condition water containing scale-forming compounds. As for example, see U.S. Patent Specifications US—A—2,783,200; 3,514,476, 2,980,610; 3,285,886, 3,463,730 and 3,518,204.

The present invention provides a polymer having an intrinsic viscosity of 0.05 to 2.5 dl/g measured in 1.0 *M* sodium chloride and prepared from:

(A) 50 to 95% by weight of an unsaturated carboxylic acid, or its salt, and

(B) 5 to 50% by weight of a betaine-containing monomer of formula

(i) 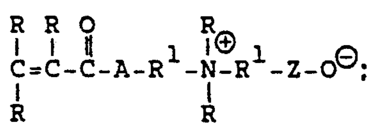

(ii) 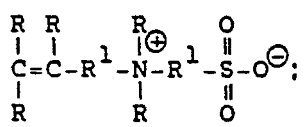 or

(iii) 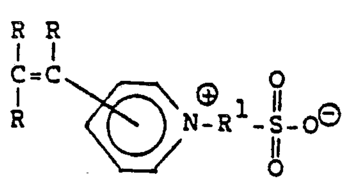

where each R, which may be the same as or different from the others, is a hydrogen atom or a straight or branched alkyl, aryl or alkylaryl group containing up to 20 carbon atoms, preferably a hydrogen atom or $C_{1-5}$ alkyl group, the or each $R^1$, which may be the same as or different from the other, if present, is a saturated straight or branched $C_{1-10}$ alkylene group, preferably $C_{1-5}$ alkylene, A is NH or O; and

Z is 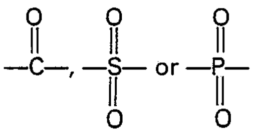 , or

Preferred polymers are prepared from 60 to 95% by weight of (A) and 5 to 4% by weight of (B) particularly from 70 to 90% by weight of (A) and 10 to 30% by weight of (B).

Also in accordance with the invention, corrosion and the formation and deposition of scale in aqueous systems are inhibited by adding to the system at least 0.1 ppm, based on the weight of water, of a water-soluble polymer in accordance with the invention.

The word "scale" includes any scale that forms in an aqueous solution. Examples include calcium carbonate, calcium sulfate, calcium phosphate, calcium phosphonate (including calcium hydroxyethylidene diphosphonic acid), calcium oxalate, barium sulfate, silica, alluvial deposits, metal oxides (including iron oxide) and metal hydroxides (including magnesium hydroxide).

Any unsaturated carboxylic acid, or its salt, may be used in the invention. Examples include acrylic acid, methacrylic acid, α-halo acrylic acid, maleic acid, itaconic acid, vinyl acetic acid, allyl acetic acid, fumaric acid and β-carboxyethyl acrylate, their salts and mixtures of two or more such compounds. The preferred carboxylic acids are acrylic acid and methacrylic acid.

Any betaine-containing monomer of the above-described structures may be used. Examples include N-methacryloxyethyl-N-(3-sulfopropyl)-N,N-dimethylammonium betaine; N-alkyl dimethylamino-N-(3-sulfopropyl)-N,N-dimethylammonium betaine; and N-vinyl pyridine-N-(3-sulfopropyl)-N,N-dimethylammonium betaine.

The polymers may be prepared by mixing the monomers, preferably in the presence of a free-radical initiator. Any free-radical initiator may be used. Examples include peroxides, azo initiators and redox systems. The polymerization may also be initiated photochemically. The preferred catalysts are sodium persulfate and sodium metabisulfite or a mixture of ammonium persulfate and any azo-type initiator, such as 2,2'-azobis-(2,4-dimethyl-4-methoxyvaleronitrile).

The polymerization may be conducted by any of a variety of procedures, for example, in solution, suspension, bulk and emulsion.

The reaction temperature is not critical. The reaction usually takes place in the range 10 to 100°C, preferably 40 to 60°C. It is generally impracticable to run the reaction below room temperature because the reaction is too slow. Above a temperature of 60°C, the molecular weight of the polymer tends to decrease. The reaction, depending on the temperature, generally takes from 5 minutes to 12 hours. Measuring for residual monomer will verify when the reaction is complete.

The pH of the reaction mixture is not critical. It is usually in the range 3.0 to 9.0.

The percentage of solids in the reaction mixture is not critical. The preferred range is 1 to 50% by weight of solids.

The polymers are usually identified by intrinsic viscosity, which is 0.05 to 2.5, preferably 0.05 to 0.5 dl/g, in 1.0 *M* sodium chloride (measured on a 75 Cannon Ubbelohde capillary viscometer).

The polymers of the invention are used in a minimum dosage of 0.1 ppm, preferably 0.1 to 25 ppm.

## Examples

### Polymerization

The monomers were mixed in the ratios indicated in the Tables so as to make up 28% of the total solution weight, Sufficient amount of sodium hydroxide was added to neutralize the solution to pH 4.5. Sodium persulfate and sodium metabisulfite, as catalyst, were added to the neutralized monomer solution at 0.8 and 1.5 percent of the solution weight respectively. The initiation temperature was 25°C. The polymerization was allowed to run to completion which usually took between 15 and 30 minutes at which time the reaction temperature had peaked between 80—90°C.

Intrinsic viscosities were measured in 1 *M* NaCl in a size 75 Cannon Ubbelohde capillary viscometer. Measurements at 2.0, 1.0, and 0.5 g/dl were taken. The Huggins equation was used to determine the intrinsic viscosity.

### Calcium Carbonate Inhibition

Calcium carbonate stabilization was determined by adding a given concentration of a polymer of the invention to a solution containing 200 mg/l $Ca^{+2}$ (as $CaCl_2$) and 600 mg/l $HCO_3^{-1}$ (as $NaHCO_3$) at pH 8.0 ± 0.1. The solution was stored in a stagnant flask for 24 hours at 60°C (140°F). Poor performing samples allow a precipitate of calcium carbonate to form. To remove these 'solids' the solution is filtered through a 2.5-µm filter. The inhibitor effectiveness under these conditions is obtained by determination of the soluble calcium content of the test solutions using the Schwarzenbach titration method (EDTA, chrome black T indicator). The soluble calcium ion concentration in the absence of inhibitor is equivalent to 0% scale inhibition. The percentage inhibition for a given test is determined by:

$$\frac{Ve - Vo}{Vt - Vo} \times 100 = \%\ \text{inhibition}$$

where Vo is the Schwarzenbach titration volume with no inhibitor present (control); Vt is the Schwarzenbach titration volume when no precipitation occurs and Ve is the experimental Schwarzenbach titration volume when inhibitors are present in the test solution.

Calcium Phosphate Inhibition

Calcium phosphate stabilization was determined by adding a given concentration of the polyampholytes of the invention to a solution containing 200 mg/l $Ca^{+2}$ (as $CaCl_2$) and 9 mg/l $PO_4^{+3}$ (as $Na_2HPO_4$). The solution is buffered at pH 8.5 by adding a 16.1% solution of $NaHCO_3$:$Na_2CO_3$. This solution was stored for 24 hours at 60°C (140°F). Poor performing samples allow calcium phosphate precipitation to occur so the stored solutions are filtered through 2.5-μm filter paper to remove 'solids'. The inhibitor effectiveness under these conditions is obtained by determination of the soluble phosphate content of the test solution using a photometric method (ascorbic acid as indicator). The range of the test is 0 to 1.6 mg/l phosphate when the colour is measured in a 1-inch (2.54-cm) cell at a wavelength of 880 nm. Higher levels can be determined by: (1) diluting the sample; (2) measuring the test colour in a smaller tube or cell; and/or (3) making the colour measurement at 625 nm. The percentage inhibition for a given test is determined by:

$$\frac{W_I—W_O}{W_T—W_O} \times 100 = \% \text{ inhibition}$$

where $W_I$, $W_O$ and $W_T$ are the mg/l $PO_4$ in the inhibitor-treated flask, the mg/l $PO_4$ in the control flask and the theoretical mg/l $PO_4$ respectively.

Calcium Sulfate Inhibition

Calcium sulfate stabilization was determined by adding a given concentration of the polyampholyte of the invention to a solution containing 4800 mg/l $Ca^{+2}$ (as $CaCl_2$) and 2000 mg/l $SO_4^{-2}$ (as $Na_2SO_4$) at pH 7.0 ± 0.5. The solution was stored in a stagnant flask for 24 hours at 60°C (140°F). Poor performing samples allow calcium sulfate precipitation to occur. To remove these solids, the solution is filtered through a 2.5-μm filter. The inhibitor effectiveness under these conditions is obtained by determination of the soluble calcium content of the test solution using the Schwarzenbach titration method (EDTA, chrome black T indicator). The soluble calcium ion concentration in the absence of inhibitor is equivalent to 0% scale inhibition. The percentage inhibition for a given test is determined by:

$$\frac{Ve—Vo}{Vt—Vo} \times 100 = \% \text{ inhibition}$$

where Vo, Vt and Ve are as defined above.

TABLE

| Composition | | [η] | $CaCO_3$ Inhibition (PPM Active) | | | $CaPO_4$ Inhibition (PPM Active) | | $CaSO_4$ Inhibition (PPM Active) | |
|---|---|---|---|---|---|---|---|---|---|
| AA[1] | MESDAB[2] | (dl/g) | 1.5 | 2.0 | 2.5 | 5.0 | 10.0 | 2.5 | 4.0 |
| 95 | 5 | 0.20 | 55 | 64 | 96 | 31 | 23 | 77 | 100 |
| 90 | 10 | 0.28 | 79 | 88 | 100 | 65 | 100 | 74 | 100 |
| 80 | 20 | — | 52 | 60 | 74 | 38 | 100 | — | — |
| 70 | 30 | 0.27 | 76 | 81 | 92 | 95 | 100 | 77 | 100 |
| 60 | 40 | — | 88 | 83 | 91 | 76 | 92 | — | — |
| 53 | 47 | — | 51 | 65 | 93 | 90 | 95 | 53 | 65 |

[1]AA = acrylic acid

[2]MESDAB = N-methacroyloxyethyl-N-(3-sulfopropyl)-N,N-dimethylammonium betaine, prepared from dimethylaminoethyl acrylate and 1,3-propane sultone.

Corrosion Inhibition

Two samples, one with additive, one without, were tested for corrosion inhibition properties for carbon steel in 4X Pittsburgh water. The test conditions were 50°C, 24 hour aeration. The corrosion rates were measured electrochemically. The results are summarized in Table II.

TABLE II

| Polymer | Dosage (ppm) | Corrosion rate (mpy) (mm/year) |
|---|---|---|
| none | 0 | 54 ± 4/1.37 ± 0.1 |
| 53/47 AA/MESDAB[1] | 50 | 31 ± 4/0.79 ± 0.1 |

[1]AA/MESDAB = acrylic acid/N-methacroyloxyethyl-N-(3-sulfopropyl)-N,N-dimethylammonium betaine

**Claims for the Contracting States: BE SE**

1. A polymer having an intrinsic viscosity of 0.05 to 2.5 dl/g measured in 1.0 *M* sodium chloride and prepared from:

(A) 50 to 95% by weight of an unsaturated carboxylic acid, or its salt, and

(B) 5 to 50% by weight of a betaine-containing monomer of formula

(i) 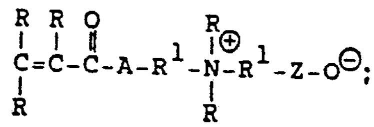

(ii) 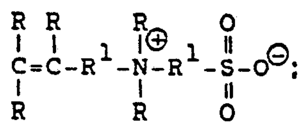 or

(iii) 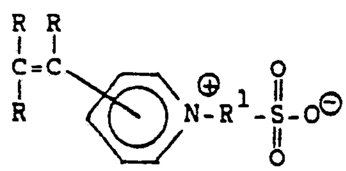

where each R, which may be the same as or different from the others, is a hydrogen atom or a straight or branched alkyl, aryl or alkylaryl group containing up to 20 carbon atoms, preferably a hydrogen atom or $C_{1-5}$ alkyl group, the or each $R^1$, which may be the same as or different from the other, if present is a saturated straight or branched $C_{1-10}$ alkylene group, preferably $C_{1-5}$ alkylene,

A is NH or O; and

Z is 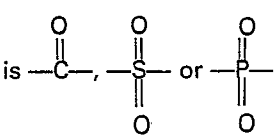

2. A polymer as claimed in Claim 1 prepared from 60 to 95% by weight of (A) and 5 to 40% by weight of (B).

3. A polymer as claimed in Claim 2 prepared from 70 to 90% by weight of (A) and 10 to 30% by weight of (B).

4. A polymer as claimed in any preceding claim having an intrinsic viscosity of 0.05 to 0.5 dl/g.

5. A polymer as claimed in any preceding claim prepared from acrylic acid and N-methacroyloxyethyl-N-(3-sulfopropyl)-N,N-dimethyl ammonium betaine.

6. A method of inhibiting corrosion and the formation and deposition of scale in aqueous systems, comprising, adding to the system at least 0.1 ppm of a water-soluble polymer as claimed in Claim 1.

7. A method as claimed in Claim 6 in which 0.1 to 25 ppm of the polymer is added to the system.

8. A method as claimed in Claim 6 or 7 in which the polymer is as defined in Claim 2 or 3.

9. A method as claimed in any one of Claims 6 to 8 in which the polymer is as defined in Claim 4.

10. A method as claimed in Claim 9 in which the polymer is as defined in Claim 5.

**Claims for the Contracting State: AT**

1. A method of preparing a polymer having an intrinsic viscosity of 0.05 to 2.5 dl/g measured in 1.0 *M* sodium chloride comprising mixing:

(A) 50 to 95% by weight of an unsaturated carboxylic acid, or its salt, and

(B) 5 to 50% by weight of a betaine-containing monomer of formula

(i) 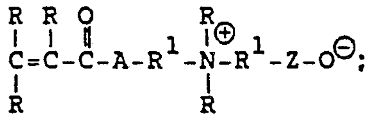

(ii) 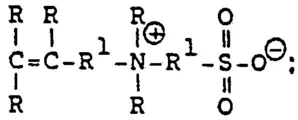 or

(iii) 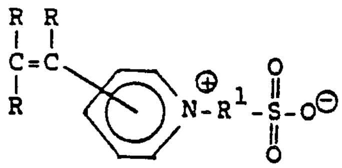

where each R, which may be the same as or different from the others, is a hydrogen atom or a straight or branched alkyl, aryl or alkylaryl group containing up to 20 carbon atoms, preferably a hydrogen atom or $C_{1-5}$ alkyl group, the or each $R^1$, which may be the same as or different from the other, if present is a saturated straight or branched $C_{1-10}$ alkylene group, preferably $C_{1-5}$ alkylene,

A is NH or O; and

Z is 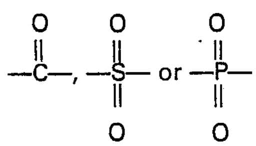

2. A method as claimed in Claim 1 in which the amounts of ingredients are 70 to 90% by weight of (A) and 10 to 30% by weight of (B).

3. A method as claimed in any preceding claim in which the polymer has an intrinsic viscosity of 0.05 to 0.5 dl/g.

4. A method as claimed in any preceding claim in which the monomers are (A) acrylic acid and (B) N-methacroyloxyethyl-N-(3-sulfopropyl)-N,N-dimethyl ammonium betaine.

5. A method as claimed in any preceding claims in which the monomers are mixed in the presence of a free-radical initiator.

6. A method as claimed in any preceding claim carried out at a temperature of 40 to 60°C.

7. A method of inhibiting corrosion and the formation and deposition of scale in aqueous systems, comprising adding to the system at least 0.1 ppm of a water-soluble polymer as defined in any one of Claims 1 to 4.

8. A method as claimed in Claim 7 in which 0.1 to 25 ppm of the polymer is added to the system.

**Patentansprüche für Vertragsstaaten: BE CH DE FR GB IT LI LU NL SE**

1. Polymer mit einer Intrinsicviskosität von 0,05 bis 2,5 dl/g, gemessen in 1,0 *M* Natriumchlorid, und hergestellt aus

(A) 50 bis 95 Gew.-% einer ungesättigten Carbonsäure oder ihres Salzes und

(B) 5 bis 50 Gew.-% eines Betain-haltigen Monomers der Formel

(i) 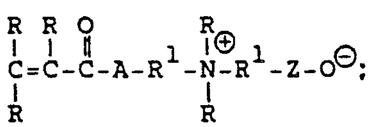

(ii) 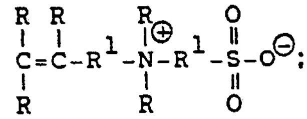 or

(iii) 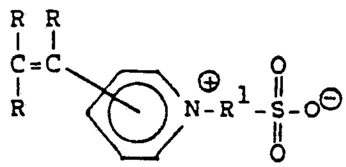

worin jedes R, welches gleich zu den anderen oder verschieden von ihnen sien kann, ein Wasserstoffatom oder eine geradkettige oder verzweigte Alkyl-, Aryl- oder Alkylarylgruppe mit bis zu 20 Kohlenstoffatomen ist, vorzugsweise ein Wasserstoffatom oder eine $C_{1-5}$-Alkylgruppe,

das oder jedes $R^1$, welches oder gleich zu den anderen oder verschieden von ihnen sein kann, eine gesättigte geradkettige oder verzweigte $C_{1-10}$-Alkylengruppe ist, vorzugsweise $C_{1-5}$-Alkylen,

A NH oder O ist; und

Z oder 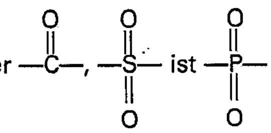 ist

2. Polymer, wie in Anspruch 1 beansprucht, hergestellt aus 60 bis 95 Gew.-% (A) und 5 bis 40 Gew.-% (B).

3. Polymer, wie in Anspruch 2 beansprucht, hergestellt aus 70 bis 90 Gew.-% (A) und 10 bis 30 Gew.-% (B).

4. Polymer, wie in einem der vorstehenden Ansprüche beansprucht, mit einer Grundviskosität von 0.05 bis 0,5 dl/g.

5. Polymer, wie in einem der vorstehenden Ansprüche beansprucht, hergestellt aus Acylsäure und N-Methacroyloxyethyl-N-(3-sulfopropyl)-N,N-dimethylammoniumbetain.

6. Verfahren zur Verhinderung der Korrosion und der Bildung und Ablagerung von Kesselstein in wässrigen Systemen durch Zugabe von wenigstens 0,1 ppm eines wasserlöslichen Polymeren, wie in Anspruch 1 beansprucht, zu diesem System.

7. Verfahren, wie in Anspruch 6 beansprucht, worin 0,1 bis 25 ppm des Polymeren zu dem System zugegeben wird.

8. Verfahren, wie in Anspruch 6 oder 7 beansprucht, worin das Polymer wie in Anspruch 2 oder 3 definiert ist.

9. Verfahren, wie in einem der Ansprüche 6 bis 8 beansprucht, worin das Polymer wie in Anspruch 4 definiert ist.

10. Verfahren, wie in Anspruch 9 beansprucht, worin das Polymer wie in Anspruch 5 definiert ist.

**Patentansprüche für den Vertragsstaat: AT**

1. Ein Verfahren zur Herstellung eines Polymers mit einer Intrinsic-Viskosität von 0,05 bis 2,5 dl/g, gemessen in 1,0 M Natriumchlorid, umfassend das Vermischen von:

(A) 50 bis 95 Gew.-% einer ungesättigten Carbonsäure oder ihres Salzes und

(B) 5 bis 50 Gew.-% eines Betain-haltigen Monomers der Formel

(i) 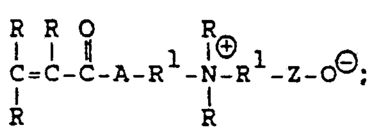

(ii) 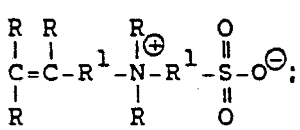 oder

(iii) 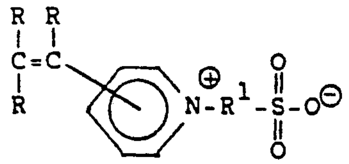

worin jeder Rests R, gleich der der anderen oder von den anderen verschieden sein kann, ein Wasserstoffatom oder eine gerad oder verzweigte Alkyl-, Aryl- oder Alkylarylgruppe mit bis zu 20 Kohlenstoffatomen, vorzugsweise ein Wasserstoffatom oder eine $C_{1-5}$-Alkylgruppe ist, der Rest $R^1$, oder jeder Rest $R^1$, der der gleiche wie der andere oder von dem anderen, falls vorhanden, verschieden sein kann, eine gesättigte gerad oder verzweigte $C_{1-10}$-Alkylengruppe, vorzugsweise $C_{1-5}$-Alkylen, ist

A NH oder O ist; und

Z oder 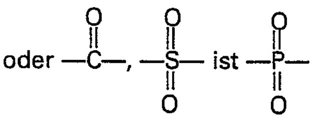 ist

2. Ein Verfahren wie in Anspruch 1 beansprucht, bei welchem die Mengen der Bestandteile 70 bis 90 Gew.-% (A) und 10 bis 30 Gew.-% (B) betragen.

3. Ein Verfahren wie in einem der vorhergehenden Ansprüche beansprucht, bei welchem das Polymer eine Intrinsic-Viskosität von 0,05 bis 0,5 dl/g hat.

4. Ein Verfahren wie in einem der vorhergehenden Ansprüche beansprucht, bei welchem die Monomeren (A) Acrylsäure und (B) N-Methacroyloxyethyl-N-(3-sulfopropyl)-N,N-dimethyl-ammonium betain sind.

5. Ein Verfahren wie in einem der vorhergehenden Ansprüche beansprucht, bei welchem die Polymeren in Gegenwart eines freiradikalischen Initiators gemischt werden.

6. Ein Verfahren wie in einem der vorhergehenden Ansprüche beansprucht, ausgeführt bei einer Temperatur von 40 bis 60°C.

7. Ein Verfahren zur Hemmung von Korrosion und der Bildung und Abscheidung von Kesselstein in wässerigen Systemen, umfassend das Zugeben von wenigstens 0,1 TpM eines wasserlöslichen Polymers, wie es in einem der Ansprüche 1 bis 4 definiert ist, zu dem System.

8. Ein Verfahren wie in Anspruch 7 beansprucht, bei welchem 0,1 bis 25 TpM des Polymers dem System zugesetzt werden.

**Revendications pour les Etats contractants: BE CH DE FR GB IT LI LU NL SE:**

1. Polymère ayant une viscosité intrinsèque de 0,05 à 2,5 dl/g mesuré dans du chlorure de sodium 1,0 *M* et préparé à partir de:

(A) 50 à 95% en poids d'un acide carboxylique insaturé ou, son sel, et

(B) 5 à 50% en poids d'un monomère contenant de la bétaîne de formule:

(i) 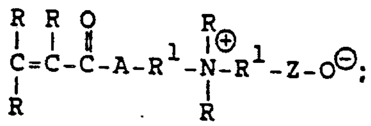

(ii) 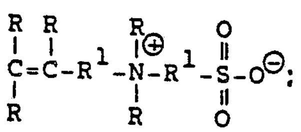 ou

(iii) 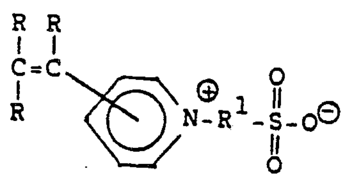

dans lesquelles chaque R, qui peut être identique ou différent des autres est un atome d'hydrogène ou un groupe alkyle linéaire ou ramifié, aryle ou alkylaryle contenant jusqu'à 20 atomes de carbone, de

préférence un atome d'hydrogène ou un groupe alkyle $C_{1-5}$, le ou chaque $R^1$, qui peut être identique ou différent de l'autre, est un groupe alkylène $C_{1-10}$ saturé linéaire ou ramifié, de préférence un alkylène $C_{1-5}$,

A est NH ou O; et

Z est 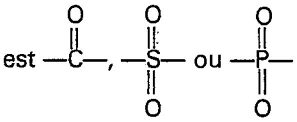

2. Polymère selon la revendication 1 préparé à partir de 60 à 95% en poids de (A) et 5 à 40% en poids de (B).

3. Polymère selon la revendication 2 préparé à partir de 70 à 90% en poids de (A) et 10 à 30% en poids de (B).

4. Polymère selon l'une quelconque des revendications précédentes ayant une viscosité intrinsèque de 0,05 à 0,5 dl/g.

5. Polymère selon l'une quelconque des revendications précédentes préparé à partir d'acide acrylique et de N-méthacroyloxyéthyl-N-(3-sulfopropyl)-N,N-diméthylammonium bétaîne.

6. Procédé d'inhibition de corrosion et de formation et dépôt de tartre dans des systèmes aqueux, comprenant l'addition au système d'au moins 0,1 ppm d'un polymère soluble dans l'eau selon la revendication 1.

7. Procédé selon la revendication 6 dans lequel on ajoute 0,1 à 25 ppm de polymère au système.

8. Procédé selon la revendication 6 ou 7 dans lequel le polymère est comme défini dans les revendications 2 ou 3.

9. Procédé selon l'une quelconque des revendications 6 à 8 dans lequel le polymère est comme défini dans la revendication 4.

10. Procédé selon la revendication 9 dans lequel le polymère est défini dans la revendication 5.

**Revendication l'Etat Contractant: AT**

1. Procédé de préparation d'un polymère ayant une viscosité intrinsèque de 0,05 à 2,5 dl/g mesuré dans du chlorure de sodium 1,0 *M* comportant le mélange de:

A) 50 à 95% en poids d'un acide carboxylique insaturé ou son sel, et

B) 5 à 50% en poids d'un monomère contenant de la bétaîne de formule:

(i) 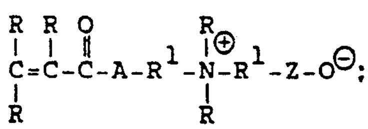

(ii) 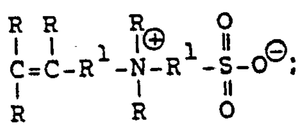 ou

(iii) 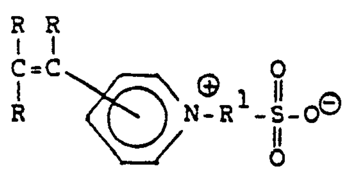

dans lesquelles chaque R, qui peut être identique ou différent des autres est un atome d'hydrogène ou un groupe alkyle linéaire ou ramifié, aryle ou arylaryle contenant jusqu'à 20 atomes de carbone, de préférence un atome d'hydrogène ou un groupe alkyle $C_{1-5}$, le ou chaque $R^1$, qui peut être identique ou différent de l'autre, s'il existe, est un groupe alkylène $C_{1-10}$ saturé linéaire ou ramifié, de préférence in alkylène $C_{1-5}$, A est NH ou O; et

Z est 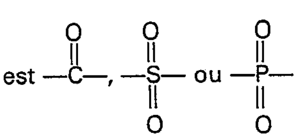

2. Procédé selon la revendication 1 dans lequel les quantités d'ingrédients sont de 70 à 90% en poids de (A) et 10 à 30% en poids de (B).

3. Procédé selon l'une quelconque des revendications précédentes dans lequel le polymère a une viscosité intrinsèque de 0,05 à 0,5 dl/g.

4. Procédé selon l'une quelconque des revendications précédentes dans lequel les monomères sont (A) l'acide acrylique et (B) le N-méthacroyloxyéthyl-N-(3-sulfopropyl)-N,N-diméthylammonium bétaîne.

5. Procédé selon l'une quelconque des revendications précédentes dans lequel les polymères sont mélangés en présence d'un initiateur de radicaux libres.

6. Procédé selon l'une quelconque des revendications précédentes, caractérisé en ce qu'il est mis en oeuvre à une température de 40 à 60°C.

7. Procédé d'inhibition de corrosion et de formation et dépôt de tartre dans des systèmes aqueux, comprenant l'addition au système d'au moins 0,1 ppm d'un polymère soluble dans l'eau, et prépare par le procédé selon l'une quelconque des revendications 1 à 4.

8. Procédé selon la revendication 7 dans lequel on ajoute 0,1 à 25 ppm de polymère au système.